# EUROPEAN PATENT SPECIFICATION

(11) **EP 2 287 578 B1**
(45) Date of publication and mention of the grant of the patent: **21.09.2016**
(21) Application number: 09746533.0
(22) Date of filing: 08.05.2009
(51) Int. Cl.: G01J 3/18, G02B 7/00, G01J 3/02

(54) **SPECTROMETER**
SPEKTROMETER
SPECTROMÈTRE

(30) Priority: 15.05.2008 JP 2008128687; 05.12.2008 JP 2008311003
(43) Date of publication of application: 23.02.2011
(73) Proprietor: Hamamatsu Photonics K.K., Hamamatsu-shi, Shizuoka 435-8558 (JP)
(72) Inventor: SHIBAYAMA Katsumi, Hamamatsu-shi Shizuoka 435-8558 (JP)
(74) Representative: Hoffmann Eitle
(86) International application number: PCT/JP2009/058669
(87) International publication number: WO 2009/139326

(56) References cited:
- EP-A2- 0 489 286
- WO-A1-2008/149939
- DE-A1- 19 717 014
- JP-A- 4 287 001
- JP-A- H04 287 001
- JP-A- 2004 053 992
- JP-A- 2004 309 146
- JP-A- 2004 354 176
- US-A- 6 081 331
- US-A1- 2004 196 458
- US-A1- 2004 239 931
- US-A1- 2006 139 636
- US-A1- 2006 268 269

## Description

### Technical Field

The present invention relates to a spectrometer which spectrally resolves and detects light.

### Background Art

As conventional spectrometers, those described in Patent Literatures 1 to 4 have been known, for example. Patent Literature 1 discloses a spectrometer in which light having entered the inside of a package is spectrally resolved by a spectroscopic unit and detected by a photodetector, while a member formed with a grating groove is fixed as the spectroscopic unit to an inner wall face of a cylindrical package.
US 2006/268269 A1 discloses a spectrometer comprising a diffraction grating monolithically integrated with other optical elements including slits and mirrors. The grating may be curved.
US 2006/139636 A1 discloses a spectrometer comprising an imaging spherical grating recessed into a spectrometer housing in order to provide a compact spectrometer.
JP 2004-053992 A discloses a diffraction grating comprising a plurality of grating grooves formed on a cylindrical surface thereby obtaining a small-sized diffraction grating and wavelength multiplexer/ demultiplexer.
EP 0 489 286 A2 discloses a spectrometer having a concave grating which is configured as biconvex lens in order to facilitate manufacturing and adjusting of the spectrometer.
US 2004/196458 A1 discloses a spectrophotometer comprising an optical waveguide, a light entrance slit and an optical element provided for separating incident light into a spectrum, wherein these elements are integrally formed on an optical waveguide board.

### Citation List

### Patent Literature

Patent Literature 1: U.S. Patent No. 4644632
Patent Literature 2: Japanese Patent Application Laid-Open No. 2000-298066
Patent Literature 3: Japanese Patent Application Laid-Open No. 8-145794
Patent Literature 4: Japanese Patent Application Laid-Open No. 2004-354176

### Summary of Invention

### Technical Problem

When a distortion occurs in the package because of a temperature change or the like in the spectrometer described in Patent Literature 1, however, the distortion may become concentrated at a boundary between a planar area surrounding the grating groove and a curved surface area formed with the grating groove, thereby generating a positional deviation in the grating groove.

In view of such circumstances, it is an object of the present invention to provide a spectrometer which can inhibit positional deviations from occurring in a grating groove even when distortions are generated in the package.

### Solution to Problem

For achieving the above-mentioned object, the spectrometer in accordance with the present invention is a spectrometer for spectrally resolving light with a spectroscopic unit and detecting the light with a photodetector, the spectrometer comprising a package for accommodating the photodetector, the package having an inner wall face including a first area formed with a plurality of grating grooves of the spectroscopic unit arranged in a row along a predetermined direction and a second area surrounding the first area, the first and second areas being continuous with each other and formed on a same curved surface.

In this spectrometer, the second area surrounding the first area formed with the grating grooves of the spectroscopic unit is continuous with the first area and formed on the same curved surface therewith. Therefore, a distortion occurring in the package is dispersed by the second area surrounding the first area. Hence, even when a distortion is generated in the package, positional deviations can be inhibited from occurring in the grating grooves.

In the spectrometer in accordance with the present invention, the package has a rectangular parallelepiped box and a rectangular plate shaped lid and a recess provided in the box including an inner wall face having a curved surface, while the first and second areas are formed in the inner wall face having the curved surface. In this case, the package is relatively thick in the first area formed in the inner wall face having the curved surface and its surrounding area. Therefore, distortions are hard to occur in the first area formed with the grating grooves even when external forces are applied to the package.

Preferably, in the spectrometer in accordance with the present invention, an outer face of the package is provided with a pair of grooves which are located on both sides of the spectroscopic unit in the predetermined direction and extend in a direction orthogonal to the predetermined direction. In this case, for example, sink marks occurring when resin-molding the package are mitigated in the predetermined direction (arranging direction of the grating grooves) by the pair of grooves, whereby the grating grooves are further restrained from shifting their positions in this direction. This can inhibit spectral characteristics from lowering.

Preferably, the spectrometer in accordance with the present invention further comprises a light transmitting substrate fitted with the package so as to oppose the spectroscopic unit, while the photodetector is attached onto the light transmitting substrate. In this case, the photodetector can be aligned with the spectroscopic unit easily with high precision.

Preferably, in the spectrometer in accordance with the present invention, a gap between the package and light transmitting substrate in the predetermined direction is narrower than a gap between the package and light transmitting substrate in a direction orthogonal to the predetermined direction. In this case, the light transmitting substrate is precisely positioned in the predetermined direction, whereby the photodetector attached onto the light transmitting substrate is also precisely positioned in the predetermined direction. This can inhibit the light detection characteristic from lowering.

### Advantageous Effects of Invention

The present invention can provide a spectrometer which can inhibit positional deviations from occurring in a grating groove even when distortions are generated in the package.

### Brief Description of Drawings

**[****Fig. 1****]** is a sectional view of an embodiment of the spectrometer in accordance with the present invention;
**[****Fig. 2****]** is an enlarged sectional view of a main part of the spectrometer of Fig. 1;
**[****Fig. 3****]** is a bottom plan view of the spectrometer of Fig. 1;
**[****Fig. 4****]** is a plan view of a package of the spectrometer of Fig. 1;
**[****Fig. 5****]** is a sectional view of another embodiment of the spectrometer in accordance with the present invention; and
**[****Fig. 6****]** is a bottom plan view of still another embodiment of the spectrometer in accordance with the present invention.

### Description of Embodiments

In the following, preferred embodiments of the present invention will be explained in detail with reference to the drawings. In the drawings, the same or equivalent parts will be referred to with the same signs while omitting their overlapping descriptions.

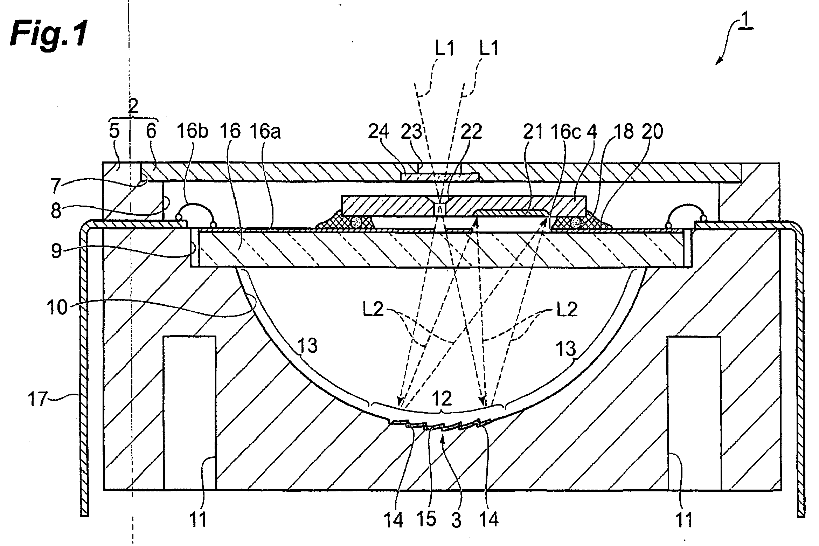

Fig. 1 is a sectional view of an embodiment of the spectrometer in accordance with the present invention. As illustrated in Fig. 1, this spectrometer 1 is one in which a spectroscopic unit 3 reflects and spectrally resolves light L1 having entered the inside of a package 2, so as to yield light L2, which is then detected by a photodetector 4.

The package 2 has a rectangular parallelepiped box 5 and a rectangular plate-shaped lid 6. The box 5 and lid 6 are made of a light shielding or absorbing resin, examples of which include liquid-crystalline wholly aromatic polyester resins, polycarbonates, and black epoxy.

The box 5 is provided with a recess 7 having a rectangular cross section with a flat bottom face, while the bottom face of the recess 7 is formed with a recess 8 having a rectangular cross section with a flat bottom face. Further, the bottom face of the recess 8 is provided with a recess 9 having a rectangular cross section with a flat bottom face, while the bottom face of the recess 9 is provided with a semispherical recess 10. The bottom face of the box 5 is provided with a pair of grooves 11. The semispherical recess 10 may be either spherical or aspherical.

The inner wall face of the recess 10 includes a bottom area (first area) 12 and an area (second area) 13 surrounding the area 12. The areas 12, 13 are areas continuous with each other and exist on the same curved surface. The area 12 is formed with a plurality of grating grooves 14 arranged in a row along a predetermined direction. The bottom part of the recess 10 is provided with the spectroscopic unit 3 including the plurality of grating grooves 14.

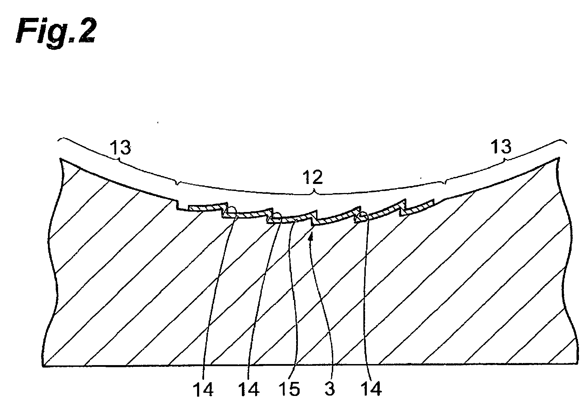

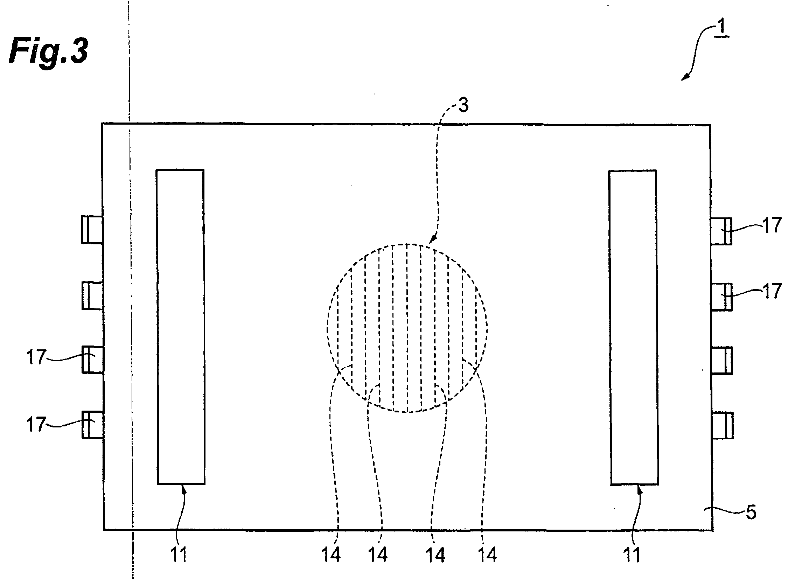

Fig. 2 is an enlarged sectional view of the spectroscopic unit 3, while Fig. 3 is a bottom face view of the spectrometer 1. As illustrated in Figs. 2 and 3, the spectroscopic unit 3 is constituted by the plurality of grating grooves 14 and a reflecting film 15 disposed so as to cover the grating grooves 14. For example, Al, Au, or the like is vapor-deposited such as to cover the area 12 formed with the grating grooves 14, whereby the reflecting film 15 is provided. Thus, the spectroscopic unit 3 is a reflection type grating constructed by vapor-depositing the reflecting film 15 onto the plurality of grating grooves 14. Types of the grating include sawtooth blazed gratings, rectangular binary gratings, and sinusoidal holographic gratings. Regulating the size of the reflecting film 15 can adjust the optical NA. The reflecting film 15 is disposed in an area smaller than the area 12 formed with the grating grooves 14 so as not to generate light which is only reflected without being spectrally resolved. A passivation film made of SiO₂, MgF₂, or the like, which is not depicted, may be formed by vapor deposition or the like so as to cover the reflecting film 15 of this reflection type grating. Here, the passivation film may be either larger or smaller than the area 12 formed with the grating grooves 14 as long as it covers the reflecting film 15.

As illustrated in Fig. 1, a light transmitting substrate 16 is fitted into the recess 9 so as to oppose the spectroscopic unit 3. The light transmitting substrate 16 is formed into a rectangular plate from any of light transmitting glass materials such as BK7, Pyrex (registered trademark), and silica, plastics, and the like, and transmits the light L1, L2 therethrough. The upper face of the light transmitting substrate 16 is formed with a light absorbing layer 16a having a light transmitting opening 16c for transmitting the light L1, L2 therethrough. Examples of materials for the light absorbing layer 16a include black resists, color resins (e.g., silicone, epoxy, acrylic, urethane, polyimide, and composite resins) containing fillers (e.g., carbon and oxides), metals and metal oxides of Cr, Co, and the like, their multilayer films, and porous ceramics and metals and metal oxides. Wiring (not depicted) is disposed on the upper or lower side of light absorbing layer 16a.

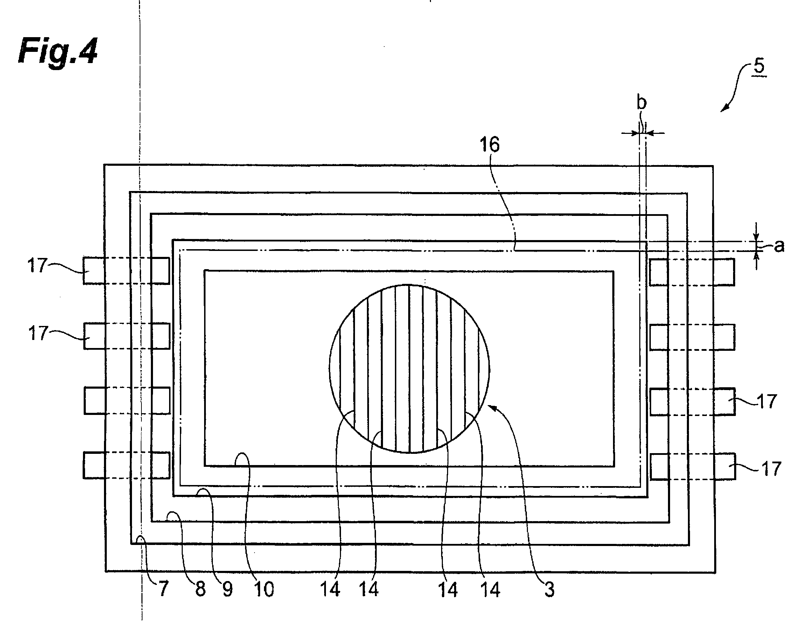

Fig. 4 is a plan view of the box 5. As illustrated in Fig. 4, the light transmitting substrate 16 and the box 5 are constructed such that a gap b between a side face of the recess 9 and a side face of the light transmitting substrate 16 in the arranging direction of the grating grooves 14 is narrower than a gap a between a side face of the recess 9 and a side face of the light transmitting substrate 16 in a direction orthogonal to the arranging direction of the grating grooves 14.

As illustrated in Fig. 1, the photodetector 4 is attached onto the light transmitting substrate 16. The photodetector 4 is shaped like a rectangular plate, whose surface on the spectroscopic unit 3 side is formed with a light detecting unit 21. The photodetector 4 is attached to the light transmitting substrate 16 by face-down bonding with bumps 18. Through the bumps 18, the photodetector 4 is electrically connected to the wiring disposed on the light transmitting substrate 16. Between the light transmitting substrate 16 and the photodetector 4, areas excluding the optical paths of the light L1, L2 are coated with a resin agent 20 covering the bumps 18 in order to improve the connection strength between the light transmitting substrate 16 and the photodetector 4.

The light detecting unit 21 is a CCD image sensor, a PD array, a CMOS image sensor, or the like, in which a plurality of channels are arranged in a row along the arranging direction of the grating grooves 14. When the light detecting unit 21 is a CCD image sensor, the intensity information of light at its incident position on two-dimensionally arranged pixels is subjected to line binning, so as to yield light intensity information at one-dimensional positions, and the intensity information at the one-dimensional positions is read in time series. That is, a line of pixels subjected to line binning forms one channel. In the case where the light detecting unit 21 is a PD array or CMOS image sensor, intensity information of light at its incident position on one-dimensionally arranged pixels is read in time series, whereby one pixel forms one channel.

When the light detecting unit 21 is a PD array or CMOS image sensor in which pixels are arranged two-dimensionally, a line of pixels aligning in a one-dimensional arrangement direction parallel to the arranging direction of the grating grooves 14 forms one channel. When the light detecting unit 21 is a CCD image sensor, one having a channel interval in the arrangement direction of 12.5 µm, a channel full length (length of the one-dimensional pixel row subjected to line binning) of 1 mm, and 256 arrangement channels, for example, is used for the photodetector 4.

The photodetector 4 is also formed with a light transmitting hole 22, disposed in parallel with the light detecting unit 21 in the channel arrangement direction, for transmitting the light L1 proceeding to the spectroscopic unit 3. The light transmitting hole 22, which is a slit (e.g., with a length of 0.5 to 1 mm and a width of 10 to 100 µm) extending in a direction substantially orthogonal to the channel arrangement direction, is formed by etching or the like while being aligned with the light detecting unit 21 with high precision.

Base end parts of a plurality of leads 17 embedded in the box 5 are exposed into the recess 8. Opposite end parts of the leads 17 extend to outside of the box 5. The base end parts of the leads 17 are electrically connected to the wiring of the light transmitting substrate 16 by wire-bonding with wires 16b. An electric signal generated when the light detecting unit 21 of the photodetector 4 receives the light L2 is taken out of the spectrometer 1 through the bumps 18 of the photodetector 4, the wiring of the light transmitting substrate 16, the wires 16b, and the leads 17.

The lid 6 is fitted into the recess 7. The lid 6 has a light entrance hole 23 for allowing the light L1 to enter the inside of the package 2. A light transmitting window member 24 is attached to the light entrance hole 23. The window member 24 is formed by any of light transmitting glass materials such as BK7, Pyrex (registered trademark), and silica, plastics, and the like.

As illustrated in Fig. 3, the grooves 11 are located on both sides of the spectroscopic unit 3 in the arranging direction of the grating grooves 14 while extending in a direction orthogonal to the arranging direction of the grating grooves 14. The grooves 11 are formed integrally at the time when the box 5 is formed.

In thus constructed spectrometer 1, the light L1 passes through the light entrance hole 23 of the lid 6 and the window member 24, so as to enter the inside of the package 1, and then passes through the light transmitting hole 22 of the photodetector 4 and the light transmitting substrate 16, thereby reaching the spectroscopic unit 3. The light L1 having reached the spectroscopic unit 3 is spectrally resolved and reflected thereby toward the light detecting unit 21 of the photodetector 4. The light L2 spectrally resolved and reflected by the spectroscopic unit 3 is transmitted through the light transmitting substrate 16 and detected by the light detecting unit 21 of the photodetector 4.

A method of manufacturing the above-mentioned spectrometer 1 will now be explained.

First, the box 5 having a rectangular parallelepiped outer form with a bottom face provided with a pair of grooves 11 and the semispherical recess 10 having a bottom part integrally formed with a plurality of grating grooves 14 along a predetermined direction is prepared. The box 5 is also molded such that the leads 17 are embedded therein. Subsequently, Al, Au, or the like is vapor-deposited in the area formed with the grating grooves 14 in the recess 10 in the box 5, so as to provide the reflecting film 15. Specifically, the reflecting film 15 is formed by vapor-depositing Al, Au, or the like, for example.

On the other hand, the light transmitting substrate 16 provided with wiring on the upper face and the photodetector 4 formed with the light transmitting hole 22 are prepared, and the photodetector 4 and the light transmitting substrate 16 are electrically connected to each other through the wiring of the light transmitting substrate 16 and the bumps 18 of the photodetector 4. Thereafter, the resin agent 20 is applied sideways so as to cover the bumps 18, thereby bonding the light transmitting substrate 16 and the photodetector 4 to each other.

Subsequently, the light transmitting substrate 16 having the photodetector 4 attached thereto is accommodated in the box 5 formed with the spectroscopic unit 3 as mentioned above. Specifically, as illustrated in Fig. 1, the light transmitting substrate 16 having the photodetector 4 attached to its upper face is fitted into the recess 9 of the box 5. Here, a resin agent (not depicted) is applied between the light transmitting substrate 16 and the box 5, so as to bond the light transmitting substrate 16 to the box 5.

Then, the wiring of the light transmitting substrate 16 is electrically connected to the base end parts of the leads 17 through the wires 16b. Finally, the lid 6 is fitted into the recess 7 of the box 5 so that they are joined together airtightly, whereby the spectrometer 1 in which the photodetector 4 is accommodated in the package 2 is obtained.

In the spectrometer 1, as explained in the foregoing, the area 13 surrounding the area 12 formed with a plurality of grating grooves 14 in the spectroscopic unit 3 is continuous with the area 12 formed with the grating grooves 14, and is formed on the same curved surface therewith. Therefore, a distortion occurring in the package 1 is dispersed by the area 13 surrounding the area 12 provided with the grating grooves 14. Hence, even when a thermal distortion is generated in the package 1, for example, positional deviations can be inhibited from occurring in the grating grooves 14, whereby the thermal dependence of spectral characteristics can be suppressed.

In the spectrometer 1, the box 5 of the package 2 has a rectangular parallelepiped outer form and the recess 10 whose bottom face is a semispherical curved surface, while the area 12 and the area 13 surrounding the area 12 are formed in the bottom face of the recess. Therefore, the box 5 of the package 2 is relatively thick in the area 12 formed in the bottom face and its surrounding area 13. As a consequence, distortions are hard to occur in the area 12 formed with the grating grooves 14 in the spectroscopic unit 3 even when external forces are applied to the package 2.

In the spectrometer 1, the bottom face of the box 5 is provided with a pair of grooves 11 which are located on both sides of the spectroscopic unit 3 in the arranging direction of the grating grooves 14 and extend in a direction orthogonal to the arranging direction of the grating grooves 14. Therefore, for example, sink marks occurring when resin-molding the box 5 of the package 2 are mitigated in the arranging direction of the grating grooves 14 by the pair of grooves, whereby the grating grooves 14 are further restrained from shifting their positions in this direction. If the grating grooves 14 incur a positional deviation in their arranging direction, the wavelength of light to be resolved spectrally may shift. Because of the reasons mentioned above, the grating grooves 14 are inhibited from shifting their positions in the arranging direction of the grating grooves 14, i.e., spectral direction of light, whereby the spectral characteristic can be kept from lowering in the spectrometer 1.

The spectrometer 1 has the light transmitting substrate 16 fitted into the recess 9 of the box 5 so as to oppose the spectroscopic unit 3, while the photodetector 4 is attached onto the light transmitting substrate 16. Therefore, the photodetector 4 can be aligned with the spectroscopic unit 3 easily with high precision in the spectrometer 1.

In the spectrometer 1, the gap b between a side face of the recess 9 and a side face of the light transmitting substrate 16 in the arranging direction of the grating grooves 14 is narrower than the gap a between a side face of the recess 9 and a side face of the light transmitting substrate 16 in a direction orthogonal to the arranging direction of the grating grooves 14. Therefore, when attaching the light transmitting substrate 16 to the box 5, the light transmitting substrate 16 is accurately positioned in the arranging direction of the grating grooves 14, whereby the photodetector 4 attached onto the light transmitting substrate 16 is also precisely positioned in the arranging direction of the grating grooves 14. If the photodetector 4 incurs a positional deviation in the arranging direction of the grating grooves 14, the wavelength of light to be detected may shift. Since the photodetector 4 can precisely be positioned in the arranging direction of the grating grooves 14, the light detection characteristic can be inhibited from lowering in the spectrometer 1. Since the gap between the side face of the recess 9 and the side face of the light transmitting substrate 16 in a direction orthogonal to the arranging direction of the grating grooves 14 is made relatively wide in the spectrometer 1, the resin agent as an adhesive is easily pushed out when mounting the light transmitting substrate 16 to the recess 9 of the box 5. Also, since the gap between the side face of the recess 9 and the side face of the light transmitting substrate 16 in a direction orthogonal to the arranging direction of the grating grooves 14 is made relatively wide, handling is easy. Therefore, the light transmitting substrate 16 can be mounted to the recess 9 of the box 5 easily with high precision.

The present invention is not limited to the above-mentioned embodiment.

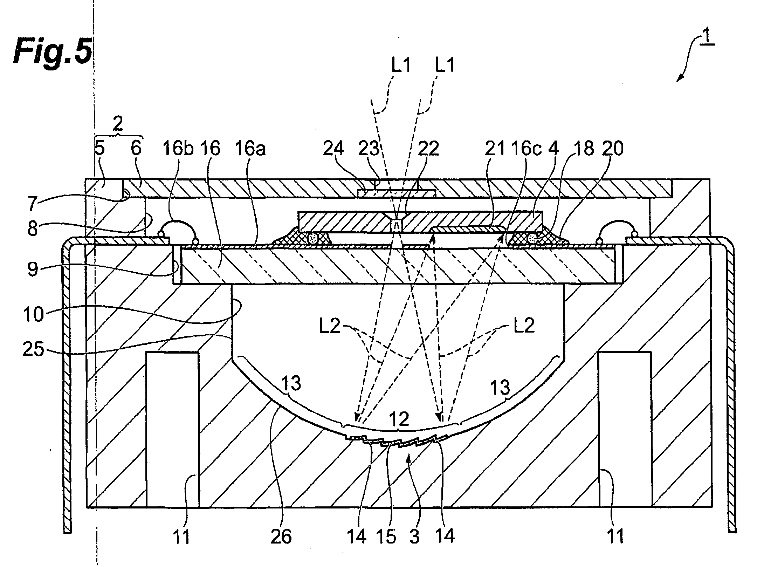

For example, while the recess 10 of the box 5 illustrated in Fig. 1 is semispherical, it is not restrictive. As illustrated in Fig. 5, the recess 10 may comprise a side face 25 which is a cylindrical curved surface (having a linear cross section) and a bottom face 26 which is a semispherical curved surface joined to the cylindrical side face 25. In thus constructed spectrometer 1, the area 12 formed with the grating grooves 14 of the spectroscopic unit 3 and the area 13 surrounding the area 12 are included in the bottom face 26 of the recess 10. The areas 12 and 13 are continuous with each other and disposed on the same curved surface in this case as well. Since the recess 10 can be narrowed in the portion failing to serve as optical paths for the incident light L1 and spectrally resolved light L2, the package 2 can be made smaller.

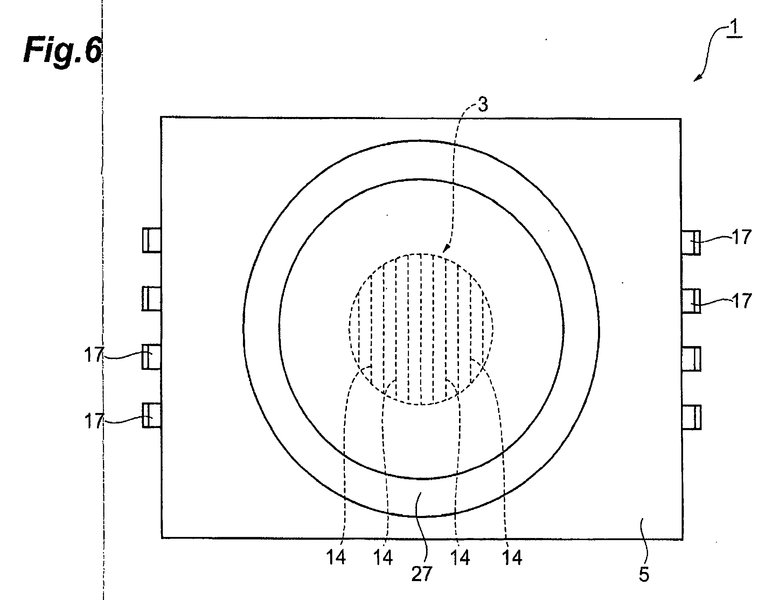

For example, as illustrated in Fig. 6, the grooves 11 formed in the bottom face of the box 5 of the package 2 can be replaced by a cylindrical groove 27 surrounding the spectroscopic unit 3. In this case, sink marks occurring when resin-molding the package 10 can be mitigated not only in the arranging direction of the grating grooves 14 but also in a direction orthogonal to the arranging direction of the grating grooves 14. This can inhibit the grating grooves 14 from shifting their positions in a direction orthogonal to their arranging direction.

### Industrial Applicability

The present invention can provide a spectrometer which can inhibit positional deviations from occurring in a grating groove even when distortions are generated in the package.

### Reference Signs List

1...spectrometer; 2...package; 3...spectroscopic unit; 4...photodetector; 10...recess; 11...groove; 12...area (first area); 13...area (second area); 14...grating groove; 16...light transmitting substrate

## Claims

1. A spectrometer (1) for spectrally resolving light with a spectroscopic unit (3) having a plurality of grating grooves (14) and detecting the light with a photodetector (4);
the spectrometer (1) comprising a package (2) for accommodating the photodetector (4);
**characterized in**
the package (2) having a rectangular parallelepiped box and a rectangular plate shaped lid and a recess (10) provided in the box including an inner wall face having a spherical curved surface and including a first area (12) formed with the plurality of grating grooves (14) of the spectroscopic unit (3) arranged in a row along a predetermined direction and a second area (13) surrounding the first area (12) and being continuous with the first area (12);
wherein the package (2) is made of light shielding or absorbing resin integrally formed with the plurality of grating grooves (14).

2. A spectrometer (1) according to claim 1, wherein an outer face of the package (2) is provided with a pair of grooves (11) which are located on both sides of the spectroscopic unit (3) in the predetermined direction and extend in a direction orthogonal to the predetermined direction.

3. A spectrometer (1) according to one of claims 1 to 2, further comprising a light transmitting substrate (16) fitted with the package (2) so as to oppose the spectroscopic unit (3);
wherein the photodetector (4) is attached onto the light transmitting substrate (16).

4. A spectrometer (1) according to claim 3, wherein a gap (b) between the package (2) and light transmitting substrate (16) in the predetermined direction is narrower than a gap (a) between the package (2) and light transmitting substrate (16) in a direction orthogonal to the predetermined direction.

## Patentansprüche

1. Spektrometer (1) zum spektralen Auflösen von Licht mit einer Spektroskopieeinheit (3), die mehrere Gitternuten (14) aufweist, und zum Detektieren des Lichts mit einem Fotodetektor (4);
wobei das Spektrometer (1) eine Packung (2) zum Aufnehmen des Fotodetektors (4) aufweist;
**dadurch gekennzeichnet, dass**
die Packung (2) eine rechteckige Parallelepiped-Box und einen rechteckigen plattenförmigen Deckel und eine in der Box vorgesehene Ausnehmung (10) umfasst, die eine innere Wandfläche mit einer sphärisch gekrümmten Oberfläche und einen ersten Bereich (12), der mit den mehreren Gitternuten (14) der Spektroskopieeinheit (3) versehen ist, die in einer Reihe entlang einer vorbestimmten Richtung angeordnet sind, und einen zweiten Bereich (13), der den ersten Bereich (12) umgibt und kontinuierlich mit dem ersten Bereich (12) ist, aufweist;
wobei die Packung (2) aus einem Licht abschattenden oder absorbierenden Kunststoff hergestellt ist, der integral mit den mehreren Gitternuten (14) ausgebildet ist.

2. Spektrometer (1) nach Anspruch 1, wobei eine äußere Fläche der Packung (2) mit einem Paar Nuten (11) versehen ist, die auf beiden Seiten der Spektroskopieeinheit (3) in der vorbestimmten Richtung angeordnet sind und sich in einer Richtung senkrecht zu der vorbestimmten Richtung erstrecken.

3. Spektrometer (1) nach einem der Ansprüche 1-2, ferner umfassend ein Licht transmittierendes Substrat (16), das mit der Packung (2) so gefügt ist, dass es der Spektroskopieeinheit (3) gegenüberliegt;
wobei der Fotodetektor (4) auf dem Licht transmittierenden Substrat (16) angebracht ist.

4. Spektrometer (1) nach Anspruch 3, wobei ein Spalt (b) zwischen der Packung (2) und dem Licht transmittierenden Substrat (16) in der vorbestimmten Richtung schmaler als ein Spalt (a) zwischen der Packung (2) und dem Licht transmittierenden Substrat (16) in einer Richtung senkrecht zu der vorbestimmten Richtung ist.

## Revendications

1. Spectromètre (1) pour la résolution spectrale d'une lumière avec une unité spectroscopique (3) ayant une pluralité de rainures de réseau de diffraction (14) et pour la détection de la lumière avec un photodétecteur (4) ;
le spectromètre (1) comprenant un boîtier (2) pour l'accueil du photodétecteur (4) ;
**caractérisé en ce que**
le boîtier (2) a une boîte parallélépipédique rectangulaire et un couvercle en forme de plaque rectangulaire et un renfoncement (10) pratiqué dans la boîte comprenant une face de paroi interne ayant une surface courbe sphérique, et comprenant une première zone (12) formée avec la pluralité de rainures de réseau de diffraction (14) de l'unité spectroscopique (3) agencées en une rangée le long d'une direction prédéterminée et une seconde zone (13) entourant la première zone (12), et étant continue avec la première zone (12) ;
dans lequel le boîtier (2) est fait d'une résine protégeant de la lumière ou absorbant celle-ci formée d'un seul tenant avec la pluralité de rainures de réseau de diffraction (14).

2. Spectromètre (1) selon la revendication 1, dans lequel une face externe du boîtier (2) est dotée d'une paire de rainures (11) qui sont situées des deux côtés de l'unité spectroscopique (3) dans la direction prédéterminée, et s'étendent dans une direction orthogonale à la direction prédéterminée.

3. Spectromètre (1) selon l'une des revendications 1 à 2, comprenant en outre un substrat de transmission de lumière (16) fourni avec le boîtier (2) de manière à être en regard de l'unité spectroscopique (3) ;
dans lequel le photodétecteur (4) est fixé sur le substrat de transmission de lumière (16).

4. Spectromètre (1) selon la revendication 3, dans lequel un espace (b) entre le boîtier (2) et le substrat de transmission de lumière (16) dans la direction prédéterminée est plus étroit qu'un espace (a) entre le boîtier (2) et le substrat de transmission de lumière (16) dans une direction orthogonale à la direction prédéterminée.
